# FASCICULE DE BREVET EUROPEEN

(11) **EP 3 539 306 B1**
(45) Date de publication et mention de la délivrance du brevet: **07.09.2022**
(21) Numéro de dépôt: 17794369.3
(22) Date de dépôt: 11.10.2017
(51) Int. Cl.: H04W 4/00, H04W 4/02, H04W 24/02, H04W 84/04, H04W 84/06, H04W 84/18, B64C 39/02

(54) **SYNCHRONISATION ASYNCHRONE AVEC UN RÉSEAU DE COMMUNICATION MOBILE**
ASYNCHRONE SYNCHRONISATION MIT EINEM MOBILKOMMUNIKATIONSNETZ
ASYNCHRONOUS SYNCHRONISATION WITH A MOBILE COMMUNICATION NETWORK

(30) Priorité: 08.11.2016 FR 1660782
(43) Date de publication de la demande: 18.09.2019
(73) Titulaire: Orange, 92130 Issy-les-Moulineaux (FR)
(72) Inventeur: FLOURY, Cédric, 92326 Châtillon Cedex (FR); TOUTAIN, François, 92326 Châtillon Cedex (FR)
(74) Mandataire: Cabinet Beau de Loménie
(86) Numéro de dépôt international: PCT/FR2017/052793
(87) Numéro de publication internationale: WO 2018/087440

(56) Documents cités:
- EP-A1- 2 938 117
- US-A1- 2015 236 778
- US-A1- 2015 236 778
- US-B1- 8 983 682
- US-B1- 8 983 682
- HAYAJNEH ALI MOHAMMAD ET AL: "Drone Empowered Small Cellular Disaster Recovery Networks for Resilient Smart Cities", 2016 IEEE INTERNATIONAL CONFERENCE ON SENSING, COMMUNICATION AND NETWORKING (SECON WORKSHOPS), IEEE, 27 juin 2016 (2016-06-27), pages 1-6, XP033010033, DOI: 10.1109/SECONW.2016.7746806
- CHUNBO LUO ET AL: "Communication provision for a team of remotely searching UAVs: A mobile relay approach", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 décembre 2012 (2012-12-03), pages 1544-1549, XP032341615, DOI: 10.1109/GLOCOMW.2012.6477815 ISBN: 978-1-4673-4942-0
- NIKLAS GODDEMEIER ET AL: "Evaluation of Potential Fields mobility strategies for aerial network provisioning", GLOBECOM WORKSHOPS (GC WKSHPS), 2011 IEEE, IEEE, 5 décembre 2011 (2011-12-05), pages 1291-1296, XP032124535, DOI: 10.1109/GLOCOMW.2011.6162393 ISBN: 978-1-4673-0039-1
- ILARIA DALMASSO ET AL: "WiMAX networks for emergency management based on UAVs", SATELLITE TELECOMMUNICATIONS (ESTEL), 2012 IEEE FIRST AESS EUROPEAN CONFERENCE ON, IEEE, 2 octobre 2012 (2012-10-02), pages 1-6, XP032296793, DOI: 10.1109/ESTEL.2012.6400206 ISBN: 978-1-4673-4687-0

## Description

### Arrière-plan de l'invention

La présente invention se situe dans le domaine des réseaux de télécommunications mobiles et porte en particulier sur la gestion de communications entre un terminal de communication et un réseau de communication mobile.

L'invention concerne en particulier l'exécution d'opérations de communication avec un réseau de communication mobile tel qu'un réseau de téléphonie mobile ou un réseau Wifi par exemple.

De façon connue, l'utilisateur d'un téléphone mobile doit impérativement se situer dans une zone de couverture d'une antenne relais du réseau cellulaire auquel il a souscrit pour pouvoir accéder à ce réseau et réaliser des opérations de téléphonie mobile (appels, envoi de message SMS...). Dans une zone non couverte, que l'on appelle aussi « zone blanche », le téléphone mobile est hors d'atteinte de son réseau cellulaire ce qui empêche toute communication avec l'extérieur. Or, certaines régions du monde (zones rurales, pays souffrant d'un manque d'infrastructure...) sont aujourd'hui mal, voire pas du tout, desservies par les opérateurs de téléphonie mobile locaux, ce qui pose un problème pour les utilisateurs. Ce problème devient notamment critique lorsqu'un utilisateur souhaite contacter des services de secours dans une situation d'urgence.

Une approche consiste aujourd'hui à utiliser des répéteurs cellulaires pour étendre la portée d'un téléphone cellulaire, mais cette technique nécessite que les répéteurs soient installés à l'avance de façon fixe entre le terminal de l'utilisateur (situé en zone blanche) et l'antenne relais la plus proche. Cette solution présente cependant d'importantes contraintes techniques liées notamment à son installation (capacités limitées des répéteurs, coût d'installation, problème de l'alimentation électrique des répéteurs etc.) et ne convient pas pour un utilisateur itinérant dont la position est susceptible de varier.

La présente invention propose de répondre notamment aux problèmes décrits ci-dessus et vise, de manière générale, à permettre ou faciliter l'accès d'un utilisateur à un réseau de communication mobile, en particulier dans le cas où le terminal de cet utilisateur se trouve hors de portée du réseau de communication mobile en question.

### Objet et résumé de l'invention

A cet effet, la présente invention propose un premier procédé de contrôle mis en œuvre par un dispositif de communication, comprenant les étapes suivantes :
- acquisition d'une localisation courante d'un engin de locomotion autonome ;
- acquisition de capacités courantes de l'engin de locomotion autonome ;
- sélection, à partir de la localisation courante et des capacités courantes, d'un point de destination atteignable par l'engin de locomotion autonome, ledit point de destination étant situé dans la zone de couverture d'un point d'accès à un réseau de communication mobile ; et
- fourniture, à l'engin de locomotion autonome, d'un jeu d'instructions spécifiant le point de destination vers lequel l'engin de locomotion autonome doit se déplacer, et spécifiant au moins une opération de communication à réaliser en connexion avec le réseau de communication mobile.

Selon un mode de réalisation particulier, le dispositif de communication et l'engin de locomotion autonome forment un seul et même dispositif. Autrement dit, l'engin de locomotion autonome joue le rôle du dispositif de communication tel que défini ci-dessus. Dans ce cas, l'engin de locomotion autonome se fournit, c'est-à-dire génère, son propre jeu d'instructions spécifiant le point de destination vers lequel ledit engin de locomotion autonome doit se déplacer, et spécifiant au moins une opération de communication à réaliser en connexion avec le réseau de communication mobile.

L'invention permet avantageusement à l'utilisateur d'un dispositif (ou terminal) de communication d'accéder de façon asynchrone à un réseau de communication mobile depuis une zone blanche, c'est-à-dire une zone non desservie par le réseau en question. Un engin de locomotion autonome permet de jouer le rôle de relais entre le réseau mobile et un utilisateur situé hors de portée dudit réseau. Diverses opérations de communication peuvent ainsi être exécutées par l'engin de locomotion autonome à la demande de l'utilisateur.

L'utilisateur peut avantageusement utiliser son terminal de communication pour commander l'exécution, par un engin de locomotion autonome, d'une mission donnée impliquant le déplacement de l'engin vers une zone desservie par le réseau mobile et la réalisation d'au moins une opération de communication en émission et/ou réception.

Selon un mode de réalisation particulier, l'étape de sélection comprend une identification d'une pluralité de points d'accès fournissant, dans une zone de couverture associée, accès au réseau de communication mobile ; le point de destination sélectionné étant situé dans la zone de couverture de l'un parmi la pluralité de points d'accès. Il est ainsi possible de sélectionner le point d'accès le plus adapté parmi une pluralité de points d'accès possibles, au vu de la position courante et des capacités courantes de l'engin de locomotion autonome.

Selon un mode de réalisation particulier, lors de l'étape de sélection, le point de destination est un point d'accès sélectionné parmi la pluralité de points d'accès.

Selon un mode de réalisation particulier, l'étape de sélection comprend une étape de présélection, à partir de la localisation courante et des capacités courantes de l'engin de locomotion autonome, d'au moins un point d'accès candidat parmi une pluralité de points d'accès au réseau de communication mobile ; le point de destination sélectionné étant situé dans la zone de couverture dudit au moins un point d'accès présélectionné.

La décomposition de l'étape de sélection en une étape de présélection et une sélection finale permet de limiter les ressources de calcul et le temps de calcul qui sont nécessaires pour déterminer le point de destination le plus approprié. Les calculs de trajets et la sélection du trajet le plus approprié peuvent être effectués uniquement pour les zones de couverture des points d'accès les plus proches du point de départ, et donc les plus pertinents.

Selon un mode de réalisation particulier, l'étape de sélection comprend :
- calcul de trajets possibles entre la localisation courante et des points de destination candidats situés dans la zone de couverture d'au moins un point d'accès ;
- estimation, pour chaque trajet calculé, d'un temps de déplacement de l'engin de locomotion autonome ou d'une consommation d'énergie de l'engin de locomotion autonome ; et
- sélection, parmi les trajets calculés, du trajet présentant le plus faible temps de déplacement ou du trajet présentant la plus faible consommation d'énergie.

De cette manière, il est possible de minimiser le temps de trajet et/ou la consommation d'énergie qui sont nécessaires à l'engin de locomotion autonome pour atteindre une position desservie par le réseau de communication mobile. On maximise ainsi les chances que ledit engin réalise sa mission.

Selon un mode de réalisation particulier, l'étape de sélection est réalisée conformément à des critères prédéfinis prenant en compte au moins l'un parmi :
- la distance entre la localisation courante de l'engin de locomotion autonome et le point de destination ;
- une topologie de terrain entre la localisation courante et le point de destination ;
- une estimation de la consommation d'énergie de l'engin de locomotion autonome entre la localisation courante et le point de destination ;
- des réglementations de déplacement applicables entre la localisation courante et le point de destination ; et
- des données météorologiques.

De cette manière, il est possible de sélectionner le point de destination le plus adapté au cas d'espèce et ainsi, on maximise les chances que l'engin de locomotion autonome réalise sa mission. L'invention permet notamment de sélectionner le point de destination le plus proche ou que l'engin de locomotion autonome a le plus de chance d'atteindre, au vu par exemple d'au moins un critère tel que défini ci-avant.

Selon un mode de réalisation particulier, le point de destination est sélectionné de sorte que les capacités courantes soient suffisantes pour que l'engin de locomotion autonome puisse atteindre le point de destination depuis la localisation courante et réaliser ladite au moins une opération de communication. On sélectionne ainsi le point de destination en fonction de la position et des capacités de l'engin de locomotion autonome afin de s'assurer que l'engin de locomotion autonome soit capable de mener à bien sa mission.

Selon un mode de réalisation particulier, ladite au moins une opération de communication comprend au moins l'un parmi :
- l'envoi de données via le réseau de communication mobile ;
- la réception de données depuis le réseau de communication mobile ; et
- le transfert des instructions à un autre engin de locomotion autonome.

L'engin de locomotion autonome peut ainsi envoyer ou recevoir au moins un message, de type SMS ou autre, ou encore envoyer ou recevoir des données de type vidéo ou multimédia. L'engin de locomotion autonome peut également envoyer la localisation courante du dispositif de communication, afin par exemple de permettre à l'utilisateur dudit dispositif d'être secouru.

Dans un mode particulier de réalisation, les différentes étapes du premier procédé de contrôle sont déterminées par des instructions de programmes d'ordinateurs.

En conséquence, l'invention vise aussi un programme d'ordinateur sur un support d'informations, ce programme étant susceptible d'être mis en œuvre dans un engin de locomotion autonome, tel qu'un drone par exemple, ou plus généralement dans un ordinateur, ce programme comportant des instructions adaptées à la mise en œuvre des étapes du premier procédé de contrôle tel que définis ci-dessus.

L'invention vise aussi un support d'enregistrement (ou support d'informations) lisible par un ordinateur, et comportant des instructions d'un programme d'ordinateur tel que mentionné ci-dessus.

Corrélativement, l'invention concerne un deuxième procédé de contrôle mis en œuvre par un engin de locomotion autonome apte à communiquer avec un réseau de communication mobile, comprenant les étapes suivantes :
- acquisition d'un jeu d'instructions ;
- déplacement de l'engin de locomotion autonome vers un point de destination spécifié dans le jeu d'instructions, ledit point de destination étant situé dans la zone de couverture d'un point d'accès à un réseau de communication mobile ;
- évaluation d'une qualité de connexion entre l'engin de locomotion autonome et le réseau de communication mobile pendant ledit déplacement ;
- exécution d'au moins une opération de communication, spécifiée dans le jeu d'instructions, en connexion avec le réseau de communication mobile, dès que l'une des conditions suivantes est remplie :
   - (1) l'engin de locomotion autonome atteint le point de destination ; et
   - (2) la qualité de connexion atteint un niveau seuil prédéterminé.

Comme déjà indiqué, l'invention permet avantageusement à un utilisateur d'accéder de façon asynchrone à un réseau de communication mobile depuis une zone blanche, c'est-à-dire une zone non desservie par le réseau en question. L'engin de locomotion autonome permet de jouer le rôle de relais entre le réseau mobile et l'utilisateur situé hors de portée dudit réseau. Diverses opérations de communication peuvent ainsi être exécutées par l'engin de locomotion autonome à la demande de l'utilisateur.

Le jeu d'instructions est par exemple reçu en provenance d'un dispositif (un terminal) de communication mettant en œuvre un procédé de contrôle comme défini ci-avant. L'utilisateur peut ainsi utiliser avantageusement son terminal de communication pour commander l'exécution, par un engin de locomotion autonome, d'une mission donnée impliquant le déplacement de l'engin vers une zone desservie par le réseau mobile et la réalisation d'au moins une opération de communication en émission et/ou réception.

La vérification du respect ou non des conditions (1) et (2) lors du déplacement vers le point de destination (périodiquement ou en temps réel par exemple) permet avantageusement d'économiser les ressources de l'engin de locomotion autonome et de minimiser le temps nécessaire audit engin pour réaliser sa mission.

Selon un mode de réalisation particulier, ladite au moins une opération de communication comprend au moins l'un parmi :
- l'envoi de données via le réseau de communication mobile ;
- la réception de données depuis le réseau de communication mobile ;
- le transfert des instructions à un autre engin de locomotion autonome.

L'engin de locomotion autonome peut ainsi envoyer ou recevoir au moins un message, de type SMS ou autre, ou encore envoyer ou recevoir des données de type vidéo ou multimédia. L'engin de locomotion autonome peut également envoyer la localisation courante du dispositif de communication, afin par exemple de permettre à l'utilisateur dudit dispositif d'être secouru.

Selon un mode de réalisation particulier, le procédé comprend :
- réalisation d'un décompte de temps à partir du début du déplacement de l'engin de locomotion autonome depuis la localisation courante vers le point de destination ; et
- un déplacement retour de l'engin de locomotion autonome vers un point de retour spécifié dans le jeu d'instructions avant achèvement de ladite au moins une opération de communication si le temps décompté atteint un temps seuil prédéterminé.

Ce mode de réalisation permet de sauvegarder l'intégrité du drone et permet son retour à l'utilisateur dans des situations où les capacités deviennent trop faibles pour permettre l'exécution total des opérations de communication souhaitées.

Selon une variante de réalisation, le procédé comprend :
- évaluation, à partir du début du déplacement de l'engin de locomotion autonome depuis la localisation courante vers le point de destination, de l'énergie restante dans une batterie de l'engin de locomotion autonome ; et
- un déplacement retour de l'engin de locomotion autonome vers un point de retour spécifié dans le jeu d'instructions avant achèvement de ladite au moins une opération de communication si ladite estimation de l'énergie restante atteint un niveau seuil prédéterminé.

Selon un mode de réalisation particulier, le procédé comprend, après achèvement de ladite au moins une opération de communication, un déplacement retour de l'engin de locomotion autonome vers un point de retour spécifié dans le jeu d'instructions. L'utilisateur peut ainsi récupérer son engin de locomotion autonome une fois la mission effectuée.

Selon un mode de réalisation particulier, le procédé comprend les étapes suivantes :
- collecte de données à partir de ladite au moins une opération de communication réalisée ; et
- transmission desdites données à un dispositif de communication lorsque ledit dispositif se trouve à portée de transmission de l'engin de locomotion autonome.

Ce mode de réalisation permet avantageusement à l'utilisateur d'être informé du déroulement de la mission réalisée par l'engin de locomotion autonome et, le cas échéant, de recevoir les données reçues par cet engin lorsque celui-ci était connecté au réseau de communication mobile.

Dans un mode particulier de réalisation, les différentes étapes du deuxième procédé de contrôle sont déterminées par des instructions de programmes d'ordinateurs.

En conséquence, l'invention vise aussi un programme d'ordinateur sur un support d'informations, ce programme étant susceptible d'être mis en œuvre dans un dispositif de communication, ou plus généralement dans un ordinateur, ce programme comportant des instructions adaptées à la mise en œuvre des étapes du deuxième procédé de contrôle tel que définis ci-dessus.

L'invention vise aussi un support d'enregistrement (ou support d'informations) lisible par un ordinateur, et comportant des instructions d'un programme d'ordinateur tel que mentionné ci-dessus.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également un dispositif (ou terminal) de communication configuré pour mettre en œuvre le premier procédé de contrôle défini ci-avant. Plus spécifiquement, l'invention concerne un dispositif de communication comprenant :
- un module de localisation configuré pour acquérir une localisation courante d'un engin de locomotion autonome ;
- un module d'acquisition de capacités configuré pour acquérir des capacités courantes de l'engin de locomotion autonome ;
- un module de sélection configuré pour sélectionner, à partir de la localisation courante et des capacités courantes, un point de destination atteignable par l'engin de locomotion autonome, ledit point de destination étant situé dans la zone de couverture d'un point d'accès à un réseau de communication mobile ; et
- un module de commande configuré pour fournir à l'engin de locomotion autonome un jeu d'instructions spécifiant le point de destination vers lequel l'engin de locomotion autonome doit se déplacer, et spécifiant au moins une opération de communication à réaliser en connexion avec le réseau de communication mobile.

L'invention concerne également un engin de locomotion autonome, tel qu'un drone par exemple, configuré pour mettre en œuvre le deuxième procédé de contrôle défini ci-avant. Plus spécifiquement, l'invention concerne un engin de locomotion autonome comprenant :
- un module d'obtention d'un jeu d'instructions ;
- un module de contrôle configuré pour contrôler le déplacement de l'engin de locomotion autonome vers un point de destination spécifié dans le jeu d'instructions, ledit point de destination étant situé dans la zone de couverture d'un point d'accès à un réseau de communication mobile ;
- un module d'évaluation configuré pour évaluer une qualité de connexion entre l'engin de locomotion autonome et le réseau de communication mobile pendant ledit déplacement ;
- un module de communication configuré pour exécuter au moins une opération de communication, spécifiée dans le jeu d'instructions, en connexion avec le réseau de communication mobile, dès que l'une des conditions suivantes est remplie :
   - l'engin de locomotion autonome atteint le point de destination ; et
   - la qualité de connexion atteint un niveau seuil prédéterminé.

On notera que les différents modes de réalisation mentionnés ci-avant en relation avec les premier et deuxième procédés de contrôle de l'invention ainsi que les avantages associés s'appliquent de façon analogue au dispositif de communication et à l'engin de locomotion autonome de l'invention tels que définis ci-avant.

Selon un mode de réalisation particulier, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

### Brève description des figures

D'autres caractéristiques et avantages de l'invention apparaîtront à la lecture de la description qui suit, faite en référence aux dessins annexés dans lesquels :
- la figure 1 représente schématiquement un système de communication comprenant un dispositif de communication et un engin de locomotion autonome conformes à un mode de réalisation particulier de l'invention ;
- la figure 2 représente schématiquement la structure du dispositif de communication illustré en figure 1, selon un mode de réalisation particulier de l'invention ;
- la figure 3 représente schématiquement la structure de l'engin de locomotion autonome illustré en figure 1, selon un mode de réalisation particulier de l'invention ;
- la figure 4 représente schématiquement des modules mis en œuvre par le dispositif de communication illustré en figures 1-2 et par l'engin de locomotion autonome illustré en figures 1 et 3, conformément à un mode de réalisation particulier de l'invention ;
- la figure 5 représente, sous forme d'un diagramme, les étapes d'un premier procédé de contrôle mis en œuvre par le dispositif de communication illustré en figure 1, selon un mode de réalisation particulier de l'invention ;
- la figure 6 représente, sous forme d'un diagramme, une variante de réalisation du premier procédé de contrôle illustré en figure 5 ; et
- la figure 7 représente, sous forme d'un diagramme, les étapes d'un deuxième procédé de contrôle mis en œuvre par l'engin de locomotion autonome illustré en figure 1, selon un mode de réalisation particulier de l'invention.

### Description détaillée de modes de réalisation

Comme déjà indiqué, l'invention concerne la gestion de communications entre un terminal de communication et un réseau de communication mobile.

Pour résoudre notamment le problème de l'accès du terminal d'utilisateur à un réseau de communication mobile depuis une zone blanche, la présente invention se propose d'utiliser un engin de locomotion autonome capable de se déplacer depuis la zone blanche vers une zone couverte par le réseau de communication mobile et capable de réaliser des opérations de communication appropriées en connexion avec ledit réseau.

Dans le présent exposé, une « zone blanche » désigne une zone (ou région) qui n'est pas couverte (ou desservie) par au moins un point d'accès d'un réseau de communication mobile considéré. Autrement dit, lorsqu'un souscripteur se situe dans une telle zone blanche, son terminal de communication (son téléphone mobile par exemple) est hors de portée des points d'accès du réseau de communication mobile et ne peut donc pas communiquer avec le réseau en question. Une telle zone blanche peut se trouver par exemple dans une zone peu habitée (désert, zone rurale...) qui n'est pas desservie par les opérateurs locaux.

Par ailleurs, on entend dans cet exposé par « engin de locomotion autonome », un engin capable d'acquérir des instructions et de se déplacer de façon autonome à partir de ces instructions. Dans les exemples de réalisation décrits ci-après, l'engin de locomotion autonome considéré est un drone, c'est-à-dire un aéronef autonome de type quelconque. Une fois que le drone a acquis ses instructions, le drone se dirige vers sa destination sans qu'aucune intervention de l'utilisateur ne soit nécessaire pour guider le drone.

Parmi les drones existants, on peut citer les drones à voilure tournante tels que les hélicoptères, quadricoptères et autres engins analogues. On peut également citer les drones à voilure fixe, propulsés par un ou plusieurs moteurs thermiques ou électriques.

On comprend toutefois que l'invention s'applique plus généralement à un quelconque engin de locomotion autonome, y compris aux engins autonomes terrestres, de surface, sous-marin et analogues.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

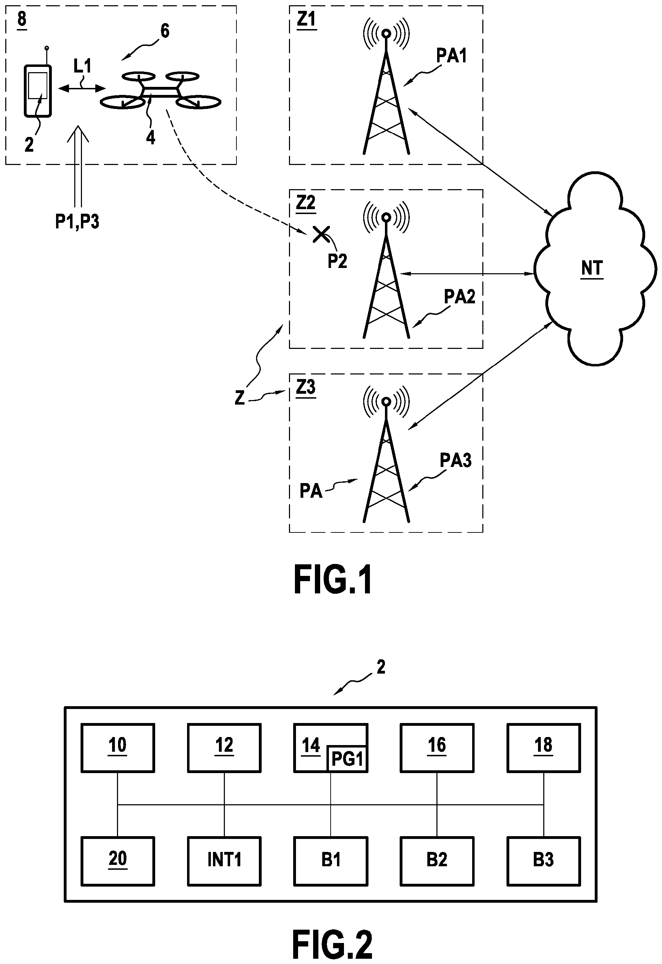

La **figure 1** représente, de manière schématique, la structure d'un système de communication 6 comprenant un drone autonome 4 et un terminal (ou dispositif) de communication 2 apte à coopérer avec le drone autonome 4 via une liaison de communication L1 lorsque le terminal 2 et le drone 2 se trouve à proximité.

On comprendra que certains éléments généralement présents dans un terminal de communication et dans un drone, ont été volontairement omis car ils ne sont pas nécessaires à la compréhension de la présente invention. Par ailleurs, le système 6 représenté en **figure 1** ne constitue qu'un exemple de réalisation, d'autres mises en œuvre étant possibles dans le cadre de l'invention. L'homme du métier comprendra en particulier que certains éléments du terminal 2 et du drone 4 ne sont décrits ici que pour faciliter la compréhension de l'invention, ces éléments n'étant pas nécessaires pour mettre en œuvre l'invention.

Comme représenté en **figure 1****,** on suppose ici que le terminal 2 est un téléphone mobile capable de communiquer avec un réseau de communication mobile NT (ou réseau cellulaire) pour accéder à des services (téléphonie, Internet etc.) auxquels l'utilisateur a souscrit. Dans cet exemple, l'accès au réseau cellulaire NT est possible via chacun des points d'accès PA1, PA2, PA3 (notés collectivement PA), ces derniers se présentant ici sous la forme d'antennes relais. Chaque point d'accès PA1-PA3 fournit un accès au réseau de communication mobile NT dans une zone de couverture (ou zone de service) respective Z1-Z3 (notées collectivement Z). Autrement dit, le terminal 2 doit se situer dans la zone de couverture Z appropriée pour pouvoir se connecter au point d'accès PA correspondant et ainsi communiquer avec le réseau cellulaire NT.

Par souci de simplicité, les zones de couverture Z sont dans cet exemple indépendantes les unes des autres. On comprendra toutefois qu'il est possible que certaines zones de couverture Z se recouvrent les unes avec les autres.

Le réseau cellulaire NT peut être un quelconque réseau cellulaire de télécommunications utilisant la technologie 2G, 3G, 4G, LTE, 5G, WiMAX ou autres. Selon un autre exemple, le réseau de communication mobile NT est un réseau Wifi.

On suppose à présent que le terminal mobile 2 (et son utilisateur) se trouve dans une zone blanche 8 du réseau NT de sorte qu'aucune connexion n'est possible entre le terminal 2 et l'un des points d'accès PA. La mise en œuvre de l'invention, selon un mode de réalisation particulier, permet à l'utilisateur de communiquer de façon asynchrone, à partir de son terminal mobile 2, avec le réseau NT par l'intermédiaire du drone 4. Pour ce faire, le drone 4 doit acquérir des instructions, déterminer à partir de ces instructions un point de destination se situant dans la zone de couverture Z d'au moins un point d'accès PA, se déplacer vers ce point de destination et réaliser, dès que l'accès au réseau NT devient possible, une ou des opérations de communication spécifiées dans lesdites instructions.

La **figure 2** représente schématiquement la structure du terminal de communication 2 conformément à un mode de réalisation particulier de l'invention. Comme déjà indiqué, le terminal 2 est configuré pour coopérer avec le drone 4 représenté en **figure 1** pour permettre une communication asynchrone avec le réseau cellulaire NT.

Plus précisément, le terminal 2 comprend dans cet exemple au moins un processeur 10, une mémoire volatile réinscriptible 12 (de type RAM), une mémoire non volatile réinscriptible 14 (de type Flash par exemple), une interface de communication 16 pour communiquer avec le réseau de communication mobile NT, une unité de localisation 18, une interface homme/machine 20, une interface de communication sans fil INT1, et des bases de données (ou mémoires) B1, B2 et B3.

La mémoire non volatile 14 constitue ici un support d'enregistrement (ou support d'informations) conforme à un mode de réalisation particulier, lisible par le terminal 2, et sur lequel est enregistré un programme d'ordinateur PG1 conforme à un mode de réalisation particulier. Ce programme d'ordinateur PG1 comporte des instructions pour l'exécution des étapes d'un procédé de contrôle selon un mode de réalisation particulier.

L'interface de communication 16 est par exemple une interface de communication 3G ou 4G configurée pour communiquer avec le réseau de communication mobile NT lorsque le terminal 2 se trouve dans la zone de couverture ZA1-ZA3 d'un point d'accès correspondant PA1-PA3. Cette interface de communication 16 utilise par exemple un module d'identité de souscripteur embarqué (une carte SIM par exemple) pour permettre l'identification et l'authentification de l'utilisateur auprès du réseau NT.

Dans l'exemple représenté en **figure 1****,** le terminal 2 se trouve initialement dans la zone blanche 8 de sorte que les points d'accès PA sont hors de portée de l'interface de communication 16.

L'unité de localisation 18 (de type GPS par exemple) est configurée pour permettre au terminal 2 d'acquérir sa localisation courante à un instant donné. Des modes de réalisation sans cette unité de localisation 18 sont toutefois possibles.

L'interface homme/machine 20, permettant à l'utilisateur d'interagir avec le terminal 2, peut comprendre un clavier, un écran tactile ou non etc.

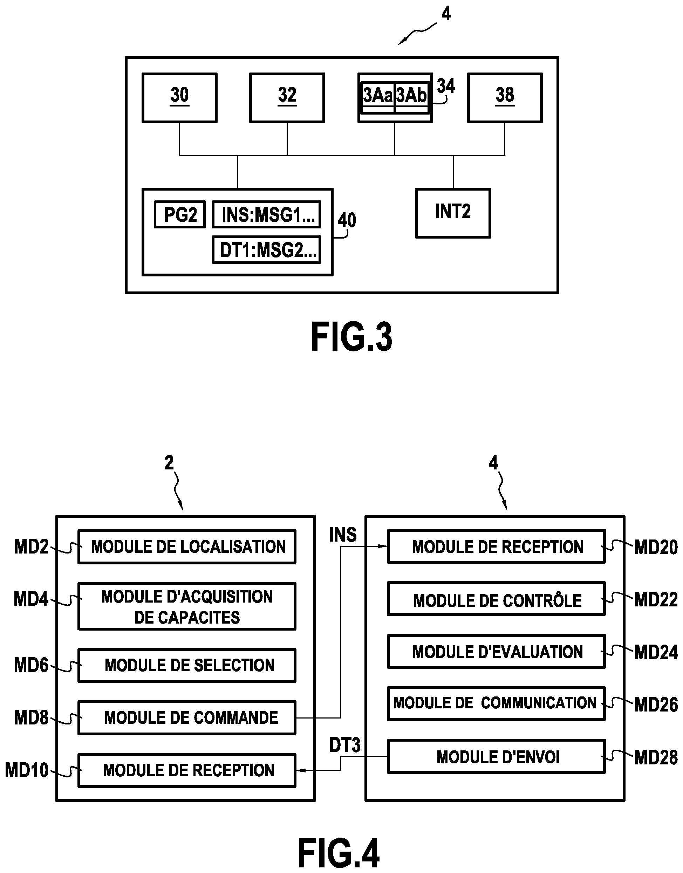

L'interface de communication sans fil INT1 est configurée pour établir une liaison de communication sans fil L1, comme représentée en **figure 1****,** avec une interface de communication sans fil correspondante INT2 (représentée dans la **figure 3**) du drone 4. Dans cet exemple, les interfaces de communication sans fil INT1 et INT2 sont configurées pour établir une liaison de communication sans fil L1 courte ou moyenne portée, de type Bluetooth ou Wifi par exemple. Comme expliqué par la suite, une telle liaison de communication L1 permet au terminal 2 d'envoyer des instructions au drone 2 et permet par la suite au drone 4 de fournir le cas échéant au terminal 2 des données qu'il a collectées une fois une ou des opérations de communication réalisées. La communication entre le terminal 2 et le drone 4 nécessite donc ici que ceux-ci se trouvent à proximité, c'est-à-dire à une distance maximale prédéterminée qui dépend du cas considéré.

Selon une autre mise en œuvre de l'invention, la liaison de communication L1 permettant au terminal 2 et au drone 4 de coopérer est de type filaire.

Dans cet exemple, le terminal 2 comprend en outre les bases de données B1, B2 et B3. D'autres modes de réalisation sont possibles dans lesquels l'une au moins de ces bases de données n'est pas présente dans le terminal 2. La base de données B1 répertorie ici au moins un point d'accès PA au réseau de communication mobile NT. Dans cet exemple, on suppose que la base de données B1 identifie la localisation de chaque point d'accès PA1-PA3, par exemple à l'aide de coordonnées géographiques (de type GPS ou autre). On considère ici que le terminal 2 est apte à déterminer les positions couvertes par les points d'accès PA à partir de la localisation desdits points d'accès PA. Selon un exemple particulier, la base de données B1 comprend la localisation des zones de couverture Z en association avec chaque point d'accès PA.

La **figure 3** représente schématiquement la structure du drone 4 conformément à un mode de réalisation particulier de l'invention. Comme déjà indiqué, le drone 4 est ici configuré pour se déplacer depuis la zone blanche 8 du réseau cellulaire NT vers un point de destination (noté par la suite P2) spécifié dans des instructions fournies par le terminal de communication 2, ce point de destination étant situé dans une zone de couverture Z de l'un des points d'accès PA, comme représenté en **figure 1****.** Le drone 4 est en outre configuré pour réaliser au moins une opération de communication avec le réseau cellulaire NT en réponse à des instructions fournies par le terminal 2. Comme expliqué par la suite, divers variantes de réalisation sont possibles.

Plus précisément, dans cet exemple, les éléments suivants sont embarqués dans le drone 4 : un contrôleur 30, des instruments de propulsion (ou de déplacement) du drone 32, des capteurs 34, une interface de communication 38 pour communiquer avec le réseau mobile NT, une mémoire non volatile réinscriptible 40 et une interface de communication INT2.

Les capteurs 34 permettent l'analyse du déplacement (du vol dans le cas présent) du drone 4. Ces capteurs 34 comprennent un capteur de positionnement 34a (de type GPS par exemple) pour déterminer la localisation courante du drone 4 et un capteur d'altitude 34b (un baromètre par exemple) pour déterminer l'altitude courante du drone 4. Parmi ces capteurs 34, on peut également trouver au moins l'un parmi : une centrale inertielle, des gyroscopes, des accéléromètres et un capteur d'analyse du vent (e.g. un anémomètre détectant la vitesse du vent, un capteur de direction du vent).

Dans cet exemple, les instruments de propulsion du drone 32 peuvent comprendre un moteur, des actionneurs, des hélices etc., et plus généralement tous éléments permettant traditionnellement à un drone de se mouvoir.

Le contrôleur 30 est configuré pour contrôler les instruments de propulsion 32 à partir des données reçues des capteurs 34 afin de causer le déplacement ou le positionnement du drone 4 conformément aux instructions qu'il a acquises.

L'interface de communication 38 est par exemple une interface de communication 3G ou 4G configurée pour communiquer avec le réseau de communication mobile NT lorsque le drone 4 se trouve dans une zone de couverture ZA1-ZA3 de l'un des points d'accès PA1-PA3. Cette interface de communication 38 utilise par exemple un module d'identité de souscripteur embarqué (une carte SIM par exemple) pour permettre l'identification et l'authentification de l'utilisateur auprès du réseau NT.

Dans l'exemple représenté en **figure 1****,** le drone 4 se trouve initialement dans la zone blanche 8 de sorte que les points d'accès PA sont, à ce stade, hors de portée de l'interface de communication 38 du drone 4.

La mémoire non volatile 40 constitue ici un support d'enregistrement (ou support d'informations) conforme à un mode de réalisation particulier, lisible par le drone 4 (et plus particulièrement par le contrôleur 30), et sur lequel est enregistré un programme d'ordinateur PG2 conforme à un mode de réalisation particulier. Ce programme d'ordinateur PG2 comporte des instructions pour l'exécution des étapes d'un procédé de contrôle selon un mode de réalisation particulier.

Dans cet exemple, la mémoire 40 est en outre configurée pour stocker des instructions INS1 acquises par le drone 4, ainsi que des données DT1 collectées (ou obtenues) par le drone 4 à partir d'au moins une opération de communication réalisée en connexion avec un point d'accès PA.

Comme déjà indiqué en référence aux **figures 1** et **2****,** l'interface de communication INT1 est configurée pour établir une liaison de communication L1 avec l'interface de communication correspondante INT1 du terminal 2. On suppose dans cet exemple que la liaison L1 est une liaison de communication sans fil, de type Bluetooth ou Wifi par exemple, une telle liaison ne pouvant s'établir que si le terminal 2 et le drone 4 se trouvent suffisamment proches l'un de l'autre. Selon un autre exemple, la liaison de communication L1 est de type filaire.

Le processeur 10 piloté par le programme d'ordinateur PG1 (**figure 2**) met en œuvre un certain nombre de modules représentés en **figure 4** conformément à un mode de réalisation particulier, à savoir : un module de localisation MD2, un module d'acquisition de capacités MD4, un module de sélection MD6, un module de commande MD8 et un module de réception MD10.

Plus précisément, le module de localisation MD2 est configuré pour acquérir une localisation courante du drone 4. Cette localisation courante se présente par exemple sous la forme de coordonnées géographiques représentant la position du drone 4. Le module de localisation MD2 reçoit par exemple cette localisation courante depuis le drone 4 qui est configuré pour déterminer sa position courante (à l'aide ici du capteur de positionnement 34a) et à transmettre cette position courante au terminal 2, par exemple via la liaison de communication L1.

Dans un exemple de réalisation particulier, le module de localisation MD2 acquiert la localisation courante du terminal 2 (par exemple à partir de l'unité de localisation 18) et, en supposant que le drone 4 se trouve à proximité du terminal 2, le module de localisation MD2 considère que la localisation courante du drone 4 est approximativement la même que celle du terminal 4.

Le module d'acquisition de capacités MD4 est configuré pour acquérir des capacités courantes du drone 4. Dans cet exemple, ces capacités courantes comprennent au moins un paramètre représentatif de l'aptitude courante du drone 4 à se déplacer et/ou à réaliser au moins une opération de communication. Les capacités courantes du drone 4 peuvent comprendre l'autonomie courante du drone 4 (par exemple son autonomie énergétique), cette autonomie pouvant être représentative d'un état d'une batterie du drone 4. Les capacités courantes peuvent comprendre le type du drone 4 ou toute autre information permettant au terminal 2 de déterminer les capacités du drone 4 à réaliser une mission comprenant au moins un déplacement et au moins une opération de communication.

Dans un exemple particulier, le module d'acquisition de capacités MD4 est configuré pour recevoir les capacités courantes depuis le drone 4, par exemple via la liaison de communication L1.

Le module de sélection MD6 est configuré pour sélectionner (ou déterminer), à partir de la localisation courante acquise par le module de localisation MD2 et des capacités courantes acquises par le module d'acquisition de capacités MD4, un point de destination atteignable par le drone 4. Le point de destination ainsi sélectionné est situé dans la zone de couverture Z d'un point d'accès PA au réseau de communication mobile NT. Dans un exemple particulier, le module de sélection MD4 est configuré pour sélectionner un point d'accès PA en tant que point de destination atteignable par le drone 4 au vu de sa localisation courante et de ses capacités courantes.

Le module de commande MD8 est configuré pour transmettre au drone 4 un jeu d'instructions INS spécifiant le point de destination (sélectionné par le module de sélection MD6) vers lequel le drone 4 doit se déplacer, et spécifiant au moins une opération de communication à réaliser en connexion avec le réseau de communication mobile NT. Le module de commande MD8 transmet ces instructions INS au drone 4 via la liaison de communication L1, une fois celle-ci établie.

Selon un exemple particulier, les instructions INS envoyées par le module de commande MD8 spécifient, en tant que point de destination, la localisation du point d'accès PA sélectionné par le module de sélection MD6.

Le module de réception MD10 est configuré pour recevoir, en provenance du drone 4, des données DT3 collectées (ou obtenues) par le drone 4 à partir d'au moins une opération de communication réalisée en connexion avec le réseau NT conformément aux instructions transmises au préalable par le module de commande MD8 du terminal 2.

Par ailleurs, côté drone 4, le contrôleur 30 piloté par le programme d'ordinateur PG2 (**figure 3****)** met également en œuvre des modules représentés en **figure 4** conformément à un mode de réalisation particulier, à savoir : un module de réception MD20, un module de contrôle MD22, un module d'évaluation MD24, un module de communication MD26 et un module d'envoi MD28.

Plus précisément, le module de réception MD20 est configuré pour acquérir les instructions INS qui, dans ce mode de réalisation, sont envoyées par le module de commande MD8 du terminal 2 via la liaison de communication L1.

Le module de contrôle MD22 est configuré pour causer le déplacement du drone 4 de façon autonome vers le point de destination spécifié dans le jeu d'instructions INS, ce point de destination étant situé dans la zone de couverture Z d'un point d'accès PA comme déjà indiqué.

Dans le cas particulier où les instructions INS reçues spécifient, en tant que point de destination, la localisation d'un point d'accès PA, le module de contrôle est configuré pour causer le déplacement du drone 4 dans sa zone de couverture Z (par exemple à une distance inférieure à une valeur seuil).

Le module d'évaluation MD24 est configuré pour évaluer une qualité de connexion entre le drone 4 et le réseau de communication mobile NT pendant ledit déplacement causé par le module de contrôle MD22. L'évaluation de cette connexion peut par exemple comprendre la détermination du débit de transfert supporté par une connexion entre le drone 4 (plus particulièrement son interface de communication 38) et le réseau NT.

Le module de communication MD26 est configuré pour réaliser au moins une opération de communication, spécifiée dans le jeu d'instructions INS reçu par le module de réception MD20, en connexion avec le réseau de communication mobile NT. Dans l'exemple de réalisation décrit ici, le module de communication MD26 réalise ladite au moins une opération de communication dès que l'une des conditions suivantes est remplie :
- le drone 4 atteint le point de destination spécifié dans les instructions INS ; et
- la qualité de connexion évaluée par le module d'évaluation MD24 atteint un niveau seuil prédéterminé.

Une opération de communication au sens de l'invention peut comprendre au moins l'un parmi:
- l'envoi de données via le réseau de communication mobile NT ; et
- la réception de données depuis le réseau de communication mobile NT.

Les données échangées entre le drone 4 et le réseau NT peuvent être quelconques, et comprendre par exemple des données vidéo, au moins un message de type SMS ou autre, etc.

Le module d'envoi MD28 est configuré pour collecter (ou déterminer) des données DT3 à partir de ladite au moins une opération de communication réalisée par le module de communication MD26, et pour transmettre ces données DT3 au terminal 2 lorsque que ce dernier se trouve à portée de transmission du drone 4 (c.-à-d. lorsque la liaison de communication L peut être rétablie entre le terminal 2 et le drone 4). Ces données DT3 peuvent comprendre par exemple des messages de type SMS ou autres reçus par le drone 4.

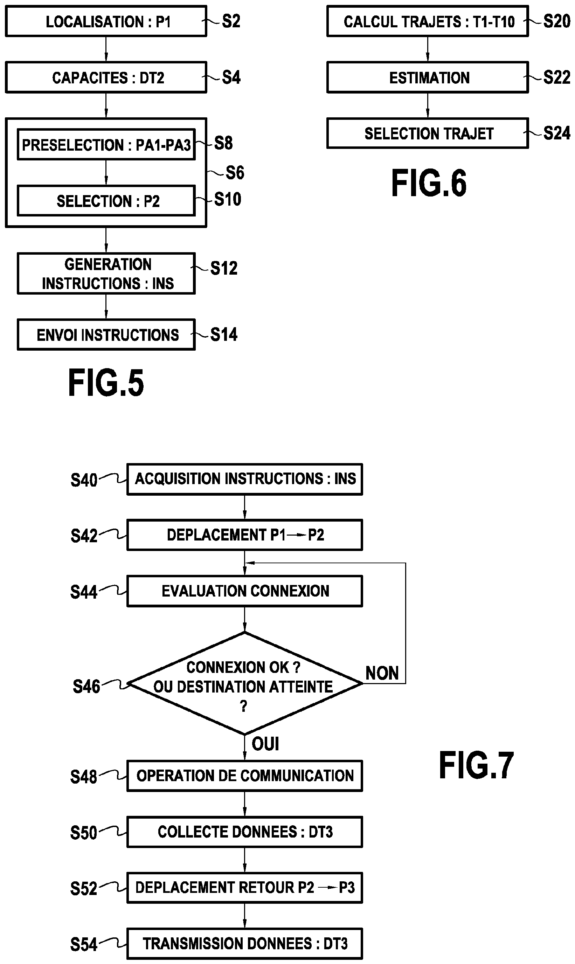

Un mode de réalisation particulier est à présent décrit en référence aux **figures 1** à **7****.** Plus précisément, le terminal de communication 2 met en œuvre un procédé de contrôle comme illustré en **figure 5**, en exécutant le programme d'ordinateur PG1. De même, le drone 4 met en œuvre un procédé de contrôle comme illustré en **figure 7**, en exécutant le programme d'ordinateur PG2.

On suppose dans un état initial que le terminal mobile 2 (et son utilisateur) se trouve à une position d'origine P1 située dans la zone blanche 8 du réseau cellulaire NT de sorte qu'aucune connexion n'est possible entre le terminal 2 et les points d'accès PA. On suppose en outre que le drone 4 se trouve à proximité du terminal 2 et de son utilisateur. La mise en œuvre des procédés de contrôle permet à l'utilisateur de communiquer de façon asynchrone, à partir de son terminal mobile 2, avec le réseau cellulaire NT par l'intermédiaire du drone 4, comme expliqué ci-après.

Au cours d'une étape d'acquisition S2, le terminal 2 fait l'acquisition de la localisation courante P1 du drone 4. Dans le cas présent, le terminal 2 obtient des données représentatives de la localisation courante P1 du drone 4, ces données comprenant par exemple des coordonnées géographiques du drone 4 au moment de l'acquisition. La localisation courante P1 du drone 4 peut être estimée à partir du positionnement courant du terminal 2 (à l'aide de son unité de localisation 18) ou à partir de données de localisation déterminées et transmises par le drone 4 lui-même.

Au cours d'une étape d'acquisition S4, le terminal 2 fait l'acquisition des capacités courantes du drone 4. Dans cet exemple, le terminal 2 obtient des données DT2 représentatives de l'autonomie de fonctionnement du drone 4 (un état de batterie par exemple). A partir de ces données DT2, le terminal 2 est capable d'estimer la ou les missions que le drone 4 est capable de réaliser à l'instant présent. Comme déjà indiqué, d'autres types de capacités courantes sont toutefois possibles.

Les étapes d'acquisition S2 et S4 peuvent être réalisées simultanément ou l'une après l'autre selon un ordre quelconque.

Le terminal 2 sélectionne (S6) ensuite, à partir de la localisation courante P1 et des capacités courantes DT2, un point de destination P2 atteignable par le drone 4, ce point de destination P2 étant situé dans la zone de couverture Z d'un point d'accès PA au réseau de communication mobile NT.

Cette sélection S6 peut être réalisée de diverses manières. Selon un exemple particulier, le terminal 2 sélectionne en S6 le point d'accès PA2 lui-même en tant que point de destination atteignable par le drone 4 en fonction de la localisation courante et des capacités courantes du drone 4.

Selon un exemple particulier, lors de la sélection S6, le terminal 2 identifie une pluralité de points d'accès PA fournissant, dans une zone de couverture associée Z, un accès au réseau NT. Le point de destination P2 sélectionné en S6 se situe alors dans la zone de couverture Z de l'un (au moins) des points d'accès identifiés. Cette identification se fait par exemple en consultant la base de données B1 embarquée dans le terminal T1. Dans le cas présent, cette identification permet d'identifier au moins les points d'accès PA1-PA3 représentés en **figure 1****.**

L'étape de sélection S6 du point de destination P2 peut être réalisée à partir d'au moins l'un quelconque des critères prédéterminés suivants :
- la distance entre la localisation courante P1 du drone 4 et le point de destination P2 ;
- une topologie de terrain (altitude, relief, type de terrain etc.) entre la localisation courante P1 et le point de destination P2 ;
- une estimation de la consommation d'énergie (consommation électrique par exemple) du drone 4 entre la localisation courante P1 et le point de destination P2 ;
- des réglementations de déplacement applicables entre la localisation courante P1 et le point de destination P2 ; et
- de données météorologiques.

Le terminal T2 peut, par exemple, consulter la base de données B2 pour déterminer la réglementation de vol applicable dans la zone concernée. De même, le terminal T2 peut, par exemple, consulter la base de données B3 pour déterminer la topologie du terrain, et notamment les obstacles qui sont susceptibles d'avoir un impact sur le trajet du drone 4 et donc sur la sélection S8 du point de destination P2.

Lors de l'étape de sélection S6, le terminal 2 peut prendre en compte la direction du vent et/ou la force du vent, et plus généralement des données météorologiques, ces éléments étant obtenus par le terminal 2 selon toute manière appropriée. Selon un exemple particulier, l'utilisateur entre sur le terminal 2 des données météorologiques relatives par exemple à la direction et/ou à la force du vent. De telles données météorologiques peuvent également être reçues par le terminal 2 à l'avance (par exemple lorsque le terminal 2 se trouve dans une zone couverte par un point d'accès PA) puis stockées par celui-ci dans une mémoire locale.

Plus particulièrement, dans l'exemple représenté en **figure 5**, l'étape de sélection S6 comprend une étape de présélection S8, à partir de la localisation courante P1 et des capacités courantes DT2 du drone 4, d'au moins un point d'accès candidat parmi une pluralité de point d'accès au réseau de communication mobile NT. Dans le cas présent, le terminal 2 présélectionne les points d'accès PA1, PA2 et PA3 conformément à au moins un critère prédéterminé. Cette présélection S8 est ici réalisée en consultant la base de données B1 embarquée dans le terminal 2. Cette présélection S8 consiste par exemple à présélectionner les points d'accès PA connus se trouvant dans le voisinage du drone 4 (et donc aussi de l'utilisateur), c'est-à-dire les points d'accès PA situés à une distance inférieure ou égale à une valeur seuil prédéterminée par rapport à la position courante P1 du drone 4.

Toujours dans l'exemple représenté en **figure 5**, l'étape de sélection S6 comprend en outre la sélection finale (étape de décision) S10 du point de destination P2, ce dernier étant situé dans la zone de couverture Z de l'un des points d'accès PA1-PA3 présélectionnés en S8. Dans un exemple particulier, le point de destination P2 sélectionné en S10 correspond à un point d'accès PA parmi ceux présélectionnés en S8.

Comme représenté en **figure 6**, la sélection finale S10 comprend par exemple :
- un calcul de trajets possibles (notés ici T1 à T10) entre la localisation courante P1 et des points de destination P2 candidats situés dans la zone de couverture Z d'au moins un point d'accès PA1-PA3 présélectionné en S8 ;
- une estimation, pour chaque trajet calculé, d'un temps de déplacement du drone 4 ou d'une consommation d'énergie du drone 4 ; et
- une sélection, parmi les trajets calculés, du trajet présentant le plus faible temps de déplacement ou du trajet présentant la plus faible consommation d'énergie.

Il est ainsi possible de sélectionner le point de destination le plus adapté au vu de l'état courant du drone 4 (sa localisation courante et ses capacités courantes), de la mission à réaliser et des spécificités du réseau de communication mobile NT.

Plusieurs trajets possibles peuvent être calculés pour un même point de destination candidat. Des trajets peuvent également être calculés et comparés pour plusieurs points de destination P2 distincts.

L'altitude pouvant avoir un impact significatif sur l'efficacité des hélices du drone 4 (dans le cas d'une propulsion à hélices), il peut être avantageux de prendre en compte, lors de l'étape de sélection S6, l'altitude moyenne de chaque trajet candidat T1-T10 considéré.

La décomposition de l'étape de sélection S6 en une étape de présélection S8 et une sélection finale S10 permet de limiter les ressources de calcul et le temps de calcul qui sont nécessaires pour déterminer le point de destination P2 le plus approprié, dans la mesure où les calculs de trajets et la sélection du trajet le plus approprié ne sont effectués que pour les points d'accès, ou les zones de couvertures des points d'accès PA, les plus proches du point de départ P1, et donc les plus pertinents.

Toutefois, il est possible de ne pas réaliser de présélection S8, et de réaliser la sélection finale S10 sur l'ensemble des points d'accès PA connus dans la base de données B1, conformément à au moins l'un des critères envisagé dans le présent exposé.

Selon un exemple particulier, le terminal 2 sélectionne le point de destination P2 de sorte que les capacités courantes DT2 du drone 4 soient suffisantes pour que le drone 4 puisse atteindre le point de destination P2 depuis la localisation courante P1 et réaliser la ou les opérations de communication nécessaires. Pour ce faire, le terminal 2 estime par exemple un durée nécessaire pour le déplacement du drone 4 du point de départ P1 au point d'arrivée P2 ainsi que la durée nécessaire pour chaque opération de communication à réaliser, et en déduit un durée minimale d'autonomie nécessaire pour réaliser une mission considérée, en y incluant éventuellement une durée additionnelle de sécurité.

Selon un exemple particulier, lors de l'étape de sélection S6, le point de destination P2 est sélectionné de sorte que le drone 4 puisse atteindre, après achèvement de la ou des opération de communication à réaliser, un point de retour P3 distinct du point de destination P2 (**figure 1**). De cette manière, l'utilisateur peut notamment récupérer son drone 4. Dans l'exemple considéré ici, le point de retour P3 est le point de départ P1. Dans ce cas, le terminal 4 prend par exemple en compte une estimation de la durée nécessaire pour le déplacement retour du drone 4 du point de destination P2 jusqu'au point de retour P3.

Selon un exemple particulier, lors de l'étape de sélection S6, le point de destination P2 est sélectionné de sorte que le drone 4, après achèvement de la ou des opérations de communication à réaliser, ne dispose pas des capacités suffisantes pour rejoindre un point de retour, tel que le point d'origine P1 par exemple. Autrement, le point de destination est sélectionné (S6) indépendamment de la capacité ou non du drone 4 à retourner à son point de départ une fois la ou les opérations de communication effectuées. Cette configuration permet d'augmenter significativement la portée d'action du drone 4, dans un cas critique par exemple où un message d'urgence doit être envoyé via le réseau NT.

Une fois le point de destination P2 sélectionné (S6), le terminal 2 génère (S12) un jeu d'instructions INS et transmets (S14) ce jeu d'instructions INS au drone 4 via la liaison de communication L1 établie au préalable comme représenté en **figure 1**.

Le jeu d'instructions INS spécifie le point de destination P2, sélectionnée en S6, vers lequel le drone 4 doit se déplacer, et spécifie en outre au moins une opération de communication à réaliser en connexion avec le réseau de communication mobile NT.

On suppose ici que le jeu d'instructions INS spécifie un point de destination P2 situé dans la zone de couverture Z2 du point d'accès PA2 et définit, en tant qu'opération de communication à réaliser, une opération de communication en émission et une opération de communication en réception, à savoir : l'envoi d'un message MSG1 de type SMS et la réception d'un message MSG2 de type SMS (par exemple en réponse au message MSG1 envoyé). Ceci ne constitue toutefois qu'un exemple non limitatif, diverses opérations de communication en émission et/ou en réception étant possibles.

Comme illustré en **figure 7**, le drone 4 reçoit le jeu d'instructions INS émis par le terminal 2 lors d'une étape d'acquisition S40.

Le drone 4 traite (S40) ensuite ces instructions S42 et en déduit le point de destination P2 à atteindre. Dans l'exemple considéré ici, c'est le terminal 2 qui a calculé le trajet à suivre pour atteindre le point de destination P2, ce trajet étant spécifié dans les instructions INS reçues. Cela permet de mettre à profit la puissance de traitement disponible au niveau du terminal de communication 2. D'autres mises en œuvre sont toutefois possibles, selon lesquelles le trajet est calculé par le drone 4.

Au cours d'une étape de déplacement S42, le drone 4 se déplace depuis le point de départ P1 vers le point de destination P2.

Comme déjà indiqué, dans un exemple particulier, le point de destination P2 spécifié dans les instructions INS peut être le point d'accès PA2 lui-même. Dans ce cas, le drone 4 se déplace vers le point d'accès PA2 et a pour destination ce point d'accès ou son voisinage, de sorte à atteindre la zone de couverture Z2 associée.

Le drone 4 évalue (S44) une qualité de connexion entre ledit drone 4 et le réseau de communication mobile NT pendant le déplacement S42. Le drone 4 détermine (S46) en outre si au moins l'une des conditions suivantes est satisfaites :
(1) le drone 4 atteint le point de destination P2 ; et
(2) la qualité de connexion atteint un niveau seuil prédéterminé.

Dès que l'une au moins des conditions (1) et (2) ci-dessus est satisfaite, le drone 4 réalise (S48) les opérations de communication spécifiées dans le jeu d'instructions INS, en connexion avec le réseau de communication mobile NT.

Dans un premier exemple, le drone 4 détecte (S46) que la condition (2) est satisfaite avant d'avoir atteint le point de destination P2. Dans ce cas, le drone 4 débute (S48) immédiatement les opérations de communication spécifiées dans les instructions INS. Le drone 4 peut s'immobiliser afin d'exécuter les opérations de communication ou, le cas échéant, poursuivre simultanément son déplacement vers le point de destination P2 si la qualité de connexion peut ou doit encore être améliorée. Dans un cas particulier, le drone 4 peut réussir à établir une connexion avec un point d'accès différent du point d'accès cible PA2, par exemple si un point d'accès inconnu est rencontré de façon inopinée par le drone 4 lors de son déplacement vers le point de destination P2.

Dans un deuxième exemple, le drone 4 atteint le point de destination P2 sans avoir au préalable détecté que la condition (2) est satisfaite. Le drone 4 tente alors d'établir (S48), depuis le point de destination P2, une connexion avec le réseau de communication mobile NT via le point d'accès PA2. Si une connexion est établie avec succès, le drone 4 réalise (S48) les opérations de communications spécifiées dans les instructions INS.

La vérification du respect ou non des conditions (1) et (2) lors du déplacement vers le point de destination P2 (périodiquement ou en temps réel) permet avantageusement d'économiser les ressources du drone 4 et de minimiser le temps nécessaire au drone 4 pour réaliser sa mission.

En S48, le drone 4 envoie par exemple le message MSG1 via le réseau NT et reçoit, depuis le réseau NT, un message MG2. Dans un exemple particulier, le drone 4 envoie en S48 la localisation courante P1 ce qui permet à un tiers de localiser l'utilisateur et, si besoin, lui venir en aide.

Après achèvement des opérations de communication, le drone 4 peut effectuer (S52) un déplacement retour vers un point de retour P3 spécifié dans le jeu d'instructions INS. L'utilisateur peut ainsi récupérer le drone 4 une fois la mission effectuée.

Si, une fois arrivé au point de destination P2, le drone 4 échoue à se connecter au réseau de communication mobile NT, le drone 4 abandonne les opérations de communication et se déplace jusqu'au point de retour P3 spécifié dans le jeu d'instructions INS.

Selon un exemple particulier, le drone 4 effectue un décompte du temps à compter du début du déplacement S44 depuis le point de départ P1 vers le point de destination P2, et effectue le déplacement retour vers le point de retour P3 spécifié dans le jeu d'instructions INS avant achèvement des opérations de communication spécifiées dans les instructions INS si le temps décompté atteint un temps seuil prédéterminé. Cette variante permet de sauvegarder l'intégrité du drone 4 et de permettre son retour à l'utilisateur dans des situations où les capacités du drone deviennent trop faibles pour permettre l'exécution complète des opérations de communication souhaitées.

Selon un exemple particulier, le drone 4 effectue une évaluation, à compter du début du déplacement de l'engin de locomotion autonome depuis la localisation courante vers le point de destination, de l'énergie restante de l'engin de locomotion autonome (par exemple dans une batterie dudit engin) ; et effectue le déplacement retour vers le point de retour P3 spécifié dans le jeu d'instructions INS avant achèvement des opérations de communication spécifiées dans ledit jeu d'instructions INS si l'estimation de l'énergie restante atteint (devient inférieure ou égale à) un niveau seuil prédéterminé.

Selon un exemple particulier, le drone 4 collecte ou détermine (S50) en outre des données DT3 à partir des opérations de communication réalisées en S48. Ces données DT3 peuvent comprendre des données reçues du réseau NT (un message de type SMS par exemple) ou des données d'historisation représentatives des opérations réalisées par le drone 4 (type d'opération, date et heure, statut de l'opération indiquant un échec ou un succès etc.). Le drone 4 peut par la suite transmettre (S54) les données DT3 au terminal 2 lorsque ce dernier se trouve suffisamment proche du drone 4 et établit une liaison de communication L1. Selon un exemple particulier, le drone 4 procède à la transmission (S54) des données DT3 dès qu'il a atteint le point de retour P3. Cette variante permet avantageusement à l'utilisateur d'être informé du déroulement de la mission réalisée par le drone 4 et, le cas échéant, recevoir les données reçues par le drone 4 lorsque celui-ci était connecté au réseau NT.

Dans les exemples de réalisation ci-dessus, le traitement nécessaire à la sélection S6 du point de destination P2 est réalisé côté terminal 2 afin de mettre à profit les ressources de traitement disponibles au niveau du terminal 2. D'autres mises en œuvre sont toutefois possibles, dans lesquels une partie au moins des étapes S2, S4 et/ou S6 est réalisé par le drone 4 lui-même. Dans ce cas, au moins l'un parmi le module de localisation MD2, le module d'acquisition de capacités MD4 et le module de sélection MD6, tels que décrits ci-avant en référence notamment à la **figure 4**, peut être inclus dans le drone 4.

Dans un exemple particulier, le drone 4 et le terminal 2 forment un seul et même dispositif. Autrement dit, le drone 4 joue également le rôle de terminal 2 tel que décrit précédemment. Le drone 4 constitue alors aussi un terminal (ou dispositif) de communication au sens de l'invention. Dans ce cas, l'utilisateur interagit directement avec le drone 4 sans faire appel à un terminal distinct pour commander le drone. Le drone 4 réalise alors lui-même les étapes d'acquisition de sa localisation courante (S2) et de ses capacités courantes (S4), l'étape de sélection (S6) et obtient (ou génère) ses propres instructions (S12) pour effectuer la mission souhaitée par l'utilisateur. Dans ce cas, l'engin de locomotion autonome peut comprendre le module de localisation MD2, le module d'acquisition de capacités MD4 et le module de sélection MD6, tels que décrits ci-avant en référence notamment à la **figure 4**.

Selon une mise en œuvre particulière, le point d'accès PA sélectionné en S6 est un deuxième engin de locomotion autonome tel qu'un deuxième drone par exemple. Ce deuxième drone présente par exemple une structure analogue à celle du drone 4 décrit ci-avant et est en particulier capable de recevoir des instructions afin de réaliser une mission analogue à celle exécutée par le drone 4 dans les exemples précédents. Dans un cas particulier, on peut envisager d'utiliser une chaîne (ou un maillage) de drones permettant de transmettre deux à deux des instructions jusqu'à un drone final qui a la charge de réaliser les opérations de communication avec le réseau de communication mobile NT. Dans cette mise en œuvre particulière, le drone 4 peut donc réaliser en S48 (**figure 7**), en tant qu'opération de communication, le transfert des instructions INS à un autre drone. Cet autre drone réalise alors, à partir des instructions INS reçues, un procédé de contrôle analogue à celui réalisé par le drone 4 selon les étapes S40-S48, et réalise en outre les étapes S52 et/ou S54 s'il s'agit du drone final de la chaîne.

L'invention permet avantageusement à l'utilisateur d'un terminal de communication d'accéder de façon asynchrone à un réseau de communication mobile depuis une zone blanche, c'est-à-dire une zone non desservie par le réseau en question. Un engin de locomotion autonome permet de jouer le rôle de relais entre le réseau mobile et un utilisateur situé hors de portée dudit réseau. Diverses opérations de communication peuvent ainsi être exécutées par l'engin de locomotion autonome à la demande de l'utilisateur.

L'utilisateur peut avantageusement utiliser son terminal de communication pour commander l'exécution, par un engin de locomotion autonome, d'une mission donnée impliquant le déplacement de l'engin vers une zone desservie par le réseau mobile et la réalisation d'au moins une opération de communication en émission et/ou réception.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de contrôle mis en oeuvre par un dispositif de communication (2), comprenant les étapes suivantes :
- acquisition (S2) d'une localisation courante (P1) d'un engin de locomotion autonome (4) ;
- acquisition (S4) de capacités courantes (DT2) de l'engin de locomotion autonome ;
- sélection (S6), à partir de la localisation courante et des capacités courantes, d'un point de destination (P2) atteignable par l'engin de locomotion autonome, ledit point de destination étant situé dans la zone de couverture (Z2) d'un point d'accès (PA2) à un réseau de communication mobile (NT) ; et
- fourniture (S14), à l'engin de locomotion autonome (4), d'un jeu d'instructions (INS) spécifiant le point de destination (P2) vers lequel l'engin de locomotion autonome doit se déplacer, et spécifiant au moins une opération de communication à réaliser en connexion avec le réseau de communication mobile.
dans lequel l'étape de sélection (S6) comprend une identification d'une pluralité de points d'accès fournissant, dans une zone de couverture associée, accès au réseau de communication mobile ;
le point de destination sélectionné étant situé dans la zone de couverture de l'un parmi la pluralité de points d'accès.

2. Procédé selon la revendication 1, dans lequel l'étape de sélection (S6) comprend une étape de présélection (S8), à partir de la localisation courante et des capacités courantes de l'engin de locomotion autonome, d'au moins un point d'accès candidat (PA1-PA3) parmi une pluralité de point d'accès au réseau de communication mobile (NT) ;
le point de destination sélectionné (P2) étant situé dans la zone de couverture (PA2) dudit au moins un point d'accès présélectionné (PA1-PA3).

3. Procédé selon la revendication 1 ou 2, dans lequel l'étape de sélection (S6) comprend :
- calcul (S20) de trajets possibles entre la localisation courante (P1) et des points de destination candidats situés dans la zone de couverture d'au moins un point d'accès (PA) ;
- estimation (S22), pour chaque trajet calculé, d'un temps de déplacement de l'engin de locomotion autonome ou d'une consommation d'énergie de l'engin de locomotion autonome ; et
- sélection (S24), parmi les trajets calculés, du trajet présentant le plus faible temps de déplacement ou du trajet présentant la plus faible consommation d'énergie.

4. Procédé selon l'une quelconque des revendications 1 à 3, dans lequel l'étape de sélection (S6) est réalisée conformément à des critères prédéfinis prenant en compte au moins l'un parmi :
- la distance entre la localisation courante (P1) de l'engin de locomotion autonome et le point de destination (P2) ;
- une topologie de terrain entre la localisation courante (P1) et le point de destination (P2) ;
- une estimation de la consommation d'énergie de l'engin de locomotion autonome entre la localisation courante (P1) et le point de destination (P2) ;
- des réglementations de déplacement applicables entre la localisation courante (P1) et le point de destination (P2) ; et
- des données météorologiques.

5. Procédé selon l'une quelconque des revendications 1 à 4, dans lequel le point de destination (P2) est sélectionné (S6) de sorte que les capacités courantes soient suffisantes pour que l'engin de locomotion autonome puisse atteindre le point de destination depuis la localisation courante et réalise ladite au moins une opération de communication.

6. Procédé selon l'une quelconque des revendications 1 à 5, dans lequel ladite au moins une opération de communication comprend au moins l'un parmi :
- l'envoi de données via le réseau de communication mobile ;
- la réception de données depuis le réseau de communication mobile ; et
- le transfert des instructions (INS) à un autre engin de locomotion autonome.

7. Procédé de contrôle mis en oeuvre par un système de communication comprenant un dispositif de communication et un engin de locomotion autonome (4) apte à communiquer avec un réseau de communication mobile (NT),
dans lequel le dispositif de communication réalise un procédé selon l'une quelconque des revendications 1 à 6 pour contrôler l'engin de locomotion autonome ;
le procédé de contrôle comprenant en outre les étapes suivantes exécutées par l'engin de locomotion autonome :
- acquisition (S40) d'un jeu d'instructions (INS) transmis par le dispositif de communication ;
- déplacement (S42) de l'engin de locomotion autonome vers un point de destination (P2) spécifié dans le jeu d'instructions, ledit point de destination étant situé dans la zone de couverture (Z) d'un point d'accès (PA) à un réseau de communication mobile (NT) ;
- évaluation (S44) d'une qualité de connexion entre l'engin de locomotion autonome et le réseau de communication mobile pendant ledit déplacement (S42) ;
- exécution (S48) d'au moins une opération de communication, spécifiée dans le jeu d'instructions, en connexion avec le réseau de communication mobile, dès que l'une au moins des conditions suivantes est remplie :
• l'engin de locomotion autonome atteint le point de destination (P2) ; et
• la qualité de connexion atteint un niveau seuil prédéterminé.

8. Procédé selon la revendication 7, dans lequel ladite au moins une opération de communication comprend au moins l'un parmi :
- l'envoi de données via le réseau de communication mobile ;
- la réception de données depuis le réseau de communication mobile ; et
- le transfert des instructions à un autre engin de locomotion autonome.

9. Procédé selon la revendication 7 ou 8, dans lequel le procédé comprend :
- réalisation par l'engin de locomotion autonome d'un décompte de temps à partir du début du déplacement de l'engin de locomotion autonome depuis la localisation courante (P1) vers le point de destination (P2) ; et
- un déplacement retour (S52) de l'engin de locomotion autonome vers un point de retour (P3) spécifié dans le jeu d'instructions avant achèvement de ladite au moins une opération de communication si le temps décompté atteint un temps seuil prédéterminé.

10. Procédé selon l'une quelconque des revendications 7 à 9, dans lequel le procédé comprend, après achèvement de ladite au moins une opération de communication, un déplacement retour (S52) de l'engin de locomotion autonome vers un point de retour spécifié dans le jeu d'instructions.

11. Procédé selon la revendication 10, comprenant :
- collecte (S50) par l'engin de locomotion autonome de données (DT3) à partir de ladite au moins une opération de communication réalisée ; et
- transmission (S54) par l'engin de locomotion autonome desdites données (DT3) à un dispositif de communication (2) lorsque ledit dispositif se trouve à portée de transmission de l'engin de locomotion autonome.

12. Programme d'ordinateur (PG1 ; PG2) comportant des instructions pour l'exécution des étapes d'un procédé selon l'une quelconque des revendications 1 à 11 lorsque ledit programme est exécuté par un ordinateur.

13. Dispositif de communication comprenant :
- un module de localisation (MD2) configuré pour acquérir une localisation courante (P1) d'un engin de locomotion autonome ;
- un module d'acquisition de capacités (MD4) configuré pour acquérir des capacités courantes de l'engin de locomotion autonome ;
- un module de sélection (MD6) configuré pour sélectionner, à partir de la localisation courante et des capacités courantes, un point de destination (P2) atteignable par l'engin de locomotion autonome, ledit point de destination étant situé dans la zone de couverture (Z2) d'un point d'accès (PA2) à un réseau de communication mobile (NT) ; et
- un module de commande configuré pour fournir à l'engin de locomotion autonome un jeu d'instructions (INS) spécifiant le point de destination vers lequel l'engin de locomotion autonome doit se déplacer, et spécifiant au moins une opération de communication à réaliser en connexion avec le réseau de communication mobile,
dans lequel le module de sélection est configuré pour réaliser une identification d'une pluralité de points d'accès fournissant, dans une zone de couverture associée, accès au réseau de communication mobile, le point de destination sélectionné étant situé dans la zone de couverture de l'un parmi la pluralité de points d'accès.

14. Système de communication comprenant un dispositif de communication selon la revendication 13 et un engin de locomotion autonome comprenant :
- un module d'obtention (MD20) d'un jeu d'instructions (INS) ;
- un module de contrôle (MD22) configuré pour contrôler le déplacement de l'engin de locomotion autonome vers un point de destination (P2) spécifié dans le jeu d'instructions, ledit point de destination étant situé dans la zone de couverture (Z2) d'un point d'accès (PA2) à un réseau de communication mobile (NT) ;
- un module d'évaluation (MD24) configuré pour évaluer une qualité de connexion entre l'engin de locomotion autonome et le réseau de communication mobile pendant ledit déplacement ;
- un module de communication (MD26) configuré pour exécuter au moins une opération de communication, spécifiée dans le jeu d'instructions, en connexion avec le réseau de communication mobile, dès que l'une au moins des conditions suivantes est remplie :
• l'engin de locomotion autonome atteint le point de destination ; et
• la qualité de connexion atteint un niveau seuil prédéterminé.

## Patentansprüche

1. Steuerungsverfahren, das durch eine Kommunikationsvorrichtung (2) umgesetzt wird, beinhaltend die folgenden Schritte:
- Erfassen (S2) eines aktuellen Standorts (P1) eines autonomen Fortbewegungsmittels (4);
- Erfassen (S4) von aktuellen Kapazitäten (DT2) des autonomen Fortbewegungsmittels;
- Auswählen (S6), basierend auf dem aktuellen Standort und den aktuellen Kapazitäten, eines Zielpunkts (P2), der durch das autonome Fortbewegungsmittel erreichbar ist, wobei sich der Zielpunkt in dem Abdeckungsbereich (Z2) eines Zugangspunkts (PA2) zu einem Mobilkommunikationsnetz (NT) befindet; und
- Bereitstellen (S14), für das autonome Fortbewegungsmittel (4), eines Satzes Anweisungen (INS), der den Zielpunkt (P2), zu dem sich das autonome Fortbewegungsmittel bewegen soll, spezifiziert und mindestens einen in Verbindung mit dem Mobilkommunikationsnetz durchzuführenden Kommunikationsvorgang spezifiziert,
wobei der Schritt des Auswählens (S6) das Identifizieren einer Vielzahl von Zugangspunkten, die in einem assoziierten Abdeckungsbereich einen Zugang zu dem Mobilkommunikationsnetz bereitstellen, beinhaltet; wobei sich der ausgewählte Zielpunkt in dem Abdeckungsbereich eines der Vielzahl von Zugangspunkten befindet.

2. Verfahren nach Anspruch 1, wobei der Schritt des Auswählens (S6) einen Schritt des Vorauswählens (S8), basierend auf dem aktuellen Standort und den aktuellen Kapazitäten des autonomen Fortbewegungsmittels, mindestens eines potentiellen Zugangspunkts (PA1-PA3) einer Vielzahl von Zugangspunkten zu dem Mobilkommunikationsnetz (NT) beinhaltet;
wobei sich der ausgewählte Zielpunkt (P2) in dem Abdeckungsbereich (PA2) des mindestens einen vorausgewählten Zugangspunkts (PA1-PA3) befindet.

3. Verfahren nach Anspruch 1 oder 2, wobei der Schritt des Auswählens (S6) Folgendes beinhaltet:
- Berechnen (S20) von möglichen Routen zwischen dem aktuellen Standort (P1) und potentiellen Zielpunkten, die sich in dem Abdeckungsbereich mindestens eines Zugangspunkts (PA) befinden;
- Ermitteln (S22), für jede berechnete Route, einer Bewegungszeit des autonomen Fortbewegungsmittels oder eines Energieverbrauchs des autonomen Fortbewegungsmittels; und
- Auswählen (S24), aus den berechneten Routen, derjenigen Route, die die kürzeste Bewegungszeit aufweist, oder derjenigen Route, die den geringsten Energieverbrauch aufweist.

4. Verfahren nach einem beliebigen der Ansprüche 1 bis 3, wobei der Schritt des Auswählens (S6) gemäß vordefinierten Kriterien unter Berücksichtigung von mindestens einem von Folgendem durchgeführt wird:
- dem Abstand zwischen dem aktuellen Standort (P1) des autonomen Fortbewegungsmittels und dem Zielpunkt (P2);
- einer Topologie des Geländes zwischen dem aktuellen Standort (P1) und dem Zielpunkt (P2);
- einer Ermittlung des Energieverbrauchs des autonomen Fortbewegungsmittels zwischen dem aktuellen Standort (P1) und dem Zielpunkt (P2);
- zwischen dem aktuellen Standort (P1) und dem Zielpunkt (P2) geltenden Bewegungsvorschriften; und
- meteorologischen Daten.

5. Verfahren nach einem beliebigen der Ansprüche 1 bis 4, wobei der Zielpunkt (P2) so ausgewählt (S6) wird, dass die aktuellen Kapazitäten ausreichen, damit das autonome Fortbewegungsmittel den Zielpunkt von dem aktuellen Standort aus erreichen kann und den mindestens einen Kommunikationsvorgang durchführt.

6. Verfahren nach einem beliebigen der Ansprüche 1 bis 5, wobei der mindestens eine Kommunikationsvorgang mindestens eines von Folgendem beinhaltet:
- das Senden von Daten über das Mobilkommunikationsnetz;
- das Empfangen von Daten von dem Mobilkommunikationsnetz; und
- das Übermitteln der Anweisungen (INS) an ein anderes autonomes Fortbewegungsmittel.

7. Steuerungsverfahren, das von einem Kommunikationssystem umgesetzt wird, das eine Kommunikationsvorrichtung und ein autonomes Fortbewegungsmittel (4), das dazu fähig ist, mit einem Mobilkommunikationsnetz (NT) zu kommunizieren, beinhaltet,
wobei die Kommunikationsvorrichtung ein Verfahren nach einem beliebigen der Ansprüche 1 bis 6 durchführt, um das autonome Fortbewegungsmittel zu steuern;
wobei das Steuerungsverfahren ferner die folgenden Schritte beinhaltet, die durch das autonome Fortbewegungsmittel ausgeführt werden:
- Erfassen (S40) eines Satzes Anweisungen (INS), der durch die Kommunikationsvorrichtung übertragen wird;
- Bewegen (S42) des autonomen Fortbewegungsmittels zu einem Zielpunkt (P2), der in dem Satz Anweisungen spezifiziert ist, wobei sich der Zielpunkt in dem Abdeckungsbereich (Z) eines Zugangspunkts (PA) zu einem Mobilkommunikationsnetz (NT) befindet;
- Bewerten (S44) einer Verbindungsqualität zwischen dem autonomen Fortbewegungsmittel und dem Mobilkommunikationsnetz während der Bewegung (S42);
- Ausführen (S48) mindestens eines Kommunikationsvorgangs, der in dem Satz Anweisungen spezifiziert ist, in Verbindung mit dem Mobilkommunikationsnetz, sobald mindestens eine der folgenden Bedingungen erfüllt ist:
• das autonome Fortbewegungsmittel erreicht den Zielpunkt (P2); und
• die Verbindungsqualität erreicht einen vorgegebenen Schwellenwert.

8. Verfahren nach Anspruch 7, wobei der mindestens eine Kommunikationsvorgang mindestens eines von Folgendem beinhaltet:
- das Senden von Daten über das Mobilkommunikationsnetz;
- das Empfangen von Daten von dem Mobilkommunikationsnetz; und
- das Übermitteln der Anweisungen an ein anderes autonomes Fortbewegungsmittel.

9. Verfahren nach Anspruch 7 oder 8, wobei das Verfahren Folgendes beinhaltet:
- Ausführen, durch das autonome Fortbewegungsmittel, einer Registrierung der Zeit basierend auf dem Start der Bewegung des autonomen Fortbewegungsmittels von dem aktuellen Standort (P1) zu dem Zielpunkt (P2); und
- eine Rückkehrbewegung (S52) des autonomen Fortbewegungsmittels zu einem Rückkehrpunkt (P3), der in dem Satz Anweisungen spezifiziert ist, vor Abschluss des mindestens einen Kommunikationsvorgangs, wenn die registrierte Zeit eine vorgegebene Zeitschwelle erreicht.

10. Verfahren nach einem beliebigen der Ansprüche 7 bis 9, wobei das Verfahren nach dem Abschluss des mindestens einen Kommunikationsvorgangs eine Rückkehrbewegung (S52) des autonomen Fortbewegungsmittels zu einem Rückkehrpunkt, der in dem Satz Anweisungen spezifiziert ist, beinhaltet.

11. Verfahren nach Anspruch 10, das Folgendes beinhaltet:
- Sammeln (S50), durch das autonome Fortbewegungsmittel, von Daten (DT3) basierend auf dem mindestens einen durchgeführten Kommunikationsvorgang; und
- Übertragen (S54), durch das autonome Fortbewegungsmittel, der Daten (DT3) an eine Kommunikationsvorrichtung (2), wenn sich die Vorrichtung in Übertragungsreichweite des autonomen Fortbewegungsmittels befindet.

12. Computerprogramm (PG1; PG2), das Anweisungen zur Ausführung der Schritte eines Verfahrens nach einem beliebigen der Ansprüche 1 bis 11 umfasst, wenn das Programm durch einen Computer ausgeführt wird.

13. Kommunikationsvorrichtung, die Folgendes beinhaltet:
- ein Standortmodul (MD2), das dazu konfiguriert ist, einen aktuellen Standort (P1) eines autonomen Fortbewegungsmittels zu erfassen;
- ein Kapazitätserfassungsmodul (MD4), das dazu konfiguriert ist, aktuelle Kapazitäten des autonomen Fortbewegungsmittels zu erfassen;
- ein Auswahlmodul (MD6), das dazu konfiguriert ist, basierend auf dem aktuellen Standort und den aktuellen Kapazitäten einen Zielpunkt (P2), der durch das autonome Fortbewegungsmittel erreichbar ist, auszuwählen, wobei sich der Zielpunkt in dem Abdeckungsbereich (Z2) eines Zugangspunkts (PA2) zu einem Mobilkommunikationsnetz (NT) befindet; und
- ein Befehlsmodul, das dazu konfiguriert ist, dem autonomen Fortbewegungsmittel einen Satz Anweisungen (INS) bereitzustellen, der den Zielpunkt, zu dem sich das autonome Fortbewegungsmittel bewegen soll, spezifiziert und mindestens einen in Verbindung mit dem Mobilkommunikationsnetz durchzuführenden Kommunikationsvorgang spezifiziert,
wobei das Auswahlmodul dazu konfiguriert ist, das Identifizieren einer Vielzahl von Zugangspunkten, die in einem assoziierten Abdeckungsbereich einen Zugang zu dem Mobilkommunikationsnetz bereitstellen, durchzuführen, wobei sich der ausgewählte Zielpunkt in dem Abdeckungsbereich eines der Vielzahl von Zugangspunkten befindet.

14. Kommunikationssystem, beinhaltend eine Kommunikationsvorrichtung nach Anspruch 13 und ein autonomes Fortbewegungsmittel, das Folgendes beinhaltet:
- ein Modul zum Erhalten (MD20) eines Satzes Anweisungen (INS);
- ein Steuerungsmodul (MD22), das dazu konfiguriert ist, die Bewegung des autonomen Fortbewegungsmittels zu einem Zielpunkt (P2), der in dem Satz Anweisungen spezifiziert ist, zu steuern, wobei sich der Zielpunkt in dem Abdeckungsbereich (Z2) eines Zugangspunkts (PA2) zu einem Mobilkommunikationsnetz (NT) befindet;
- ein Bewertungsmodul (MD24), das dazu konfiguriert ist, eine Verbindungsqualität zwischen dem autonomen Fortbewegungsmittel und dem Mobilkommunikationsnetz während der Bewegung zu bewerten;
- ein Kommunikationsmodul (MD26), das dazu konfiguriert ist, mindestens einen Kommunikationsvorgang, der in dem Satz Anweisungen spezifiziert ist, in Verbindung mit dem Mobilkommunikationsnetz auszuführen, sobald mindestens eine der folgenden Bedingungen erfüllt ist:
• das autonome Fortbewegungsmittel erreicht den Zielpunkt; und
• die Verbindungsqualität erreicht einen vorgegebenen Schwellenwert.

## Claims

1. Control method implemented by a communication device (2), comprising the following steps:
- acquisition (S2) of a current location (P1) of an autonomous locomotion craft (4);
- acquisition (S4) of current capabilities (DT2) of the autonomous locomotion craft;
- selection (S6), on the basis of the current location and of the current capabilities, of a destination point (P2) reachable by the autonomous locomotion craft, said destination point being situated in the area of coverage (Z2) of an access point (PA2) to a mobile communication network (NT); and
- provision (S14), to the autonomous locomotion craft (4), of a set of instructions (INS) specifying the destination point (P2) toward which the autonomous locomotion craft should move, and specifying at least one communication operation to be carried out in connection with the mobile communication network,
in which the selection step (S6) comprises an identification of a plurality of access points providing, in an associated area of coverage, access to the mobile communication network;
the selected destination point being situated in the area of coverage of one among the plurality of access points.

2. Method according to Claim 1, in which the selection step (S6) comprises a step (S8) of preselecting, on the basis of the current location and of the current capabilities of the autonomous locomotion craft, at least one candidate access point (PA1-PA3) from among a plurality of access points to the mobile communication network (NT);
the selected destination point (P2) being situated in the area of coverage (PA2) of said at least one preselected access point (PA1-PA3).

3. Method according to Claim 1 or 2, in which the selection step (S6) comprises:
- calculation (S20) of possible paths between the current location (P1) and candidate destination points situated in the area of coverage of at least one access point (PA);
- estimation (S22), for each calculated path, of a time of movement of the autonomous locomotion craft or of an energy consumption of the autonomous locomotion craft; and
- selection (S24), from among the calculated paths, of the path exhibiting the lowest movement time or of the path exhibiting the lowest energy consumption.

4. Method according to any one of Claims 1 to 3, in which the selection step (S6) is carried out in accordance with predefined criteria taking into account at least one from among:
- the distance between the current location (P1) of the autonomous locomotion craft and the destination point (P2) ;
- a topology of terrain between the current location (P1) and the destination point (P2);
- an estimation of the energy consumption of the autonomous locomotion craft between the current location (P1) and the destination point (P2);
- applicable regulations in respect of movement between the current location (P1) and the destination point (P2); and
- meteorological data.

5. Method according to any one of Claims 1 to 4, in which the destination point (P2) is selected (S6) such that the current capabilities are sufficient for the autonomous locomotion craft to be able to reach the destination point from the current location and carry out said at least one communication operation.

6. Method according to any one of Claims 1 to 5, in which said at least one communication operation comprises at least one from among:
- the dispatching of data via the mobile communication network;
- the receiving of data from the mobile communication network; and
- the transferring of the instructions (INS) to another autonomous locomotion craft.

7. Control method implemented by a communication system comprising a communication device and an autonomous locomotion craft (4) able to communicate with a mobile communication network (NT),
wherein the communication device carries out a method according to any one of Claims 1 to 6 to control the autonomous locomotion craft;
the control method furthermore comprising the following steps carried out by the autonomous locomotion craft:
- acquisition (S40) of a set of instructions (INS) transmitted by the communication device;
- movement (S42) of the autonomous locomotion craft toward a destination point (P2) specified in the set of instructions, said destination point being situated in the area of coverage (Z) of an access point (PA) to a mobile communication network (NT);
- evaluation (S44) of a quality of connection between the autonomous locomotion craft and the mobile communication network during said movement (S42);
- execution (S48) of at least one communication operation, specified in the set of instructions, in connection with the mobile communication network, as soon as one of the following conditions is fulfilled:
• the autonomous locomotion craft reaches the destination point (P2); and
• the connection quality reaches a predetermined threshold level.

8. Method according to Claim 7, in which said at least one communication operation comprises at least one from among:
- the dispatching of data via the mobile communication network;
- the receiving of data from the mobile communication network; and
- the transferring of the instructions to another autonomous locomotion craft.

9. Method according to Claim 7 or 8, in which the method comprises:
- the autonomous locomotion craft carrying out a time countdown commencing from the start of the movement of the autonomous locomotion craft from the current location (P1) to the destination point (P2); and
- a return movement (S52) of the autonomous locomotion craft toward a return point (P3) specified in the set of instructions before completion of said at least one communication operation if the time counted down reaches a predetermined threshold time.

10. Method according to any one of Claims 7 to 9, in which the method comprises, after completion of said at least one communication operation, a return movement (S52) of the autonomous locomotion craft toward a return point specified in the set of instructions.

11. Method according to Claim 10, comprising:
- the autonomous locomotion craft collecting (S50) data (DT3) on the basis of said at least one communication operation carried out; and
- the autonomous locomotion craft transmitting (S54) said data (DT3) to a communication device (2) when said device is situated within transmission range of the autonomous locomotion craft.

12. Computer program (PG1; PG2) comprising instructions for the execution of the steps of a method according to any one of Claims 1 to 11 when said program is executed by a computer.

13. Communication device comprising:
- a location module (MD2) configured to acquire a current location (P1) of an autonomous locomotion craft;
- a capabilities acquisition module (MD4) configured to acquire current capabilities of the autonomous locomotion craft;
- a selection module (MD6) configured to select, on the basis of the current location and of the current capabilities, a destination point (P2) reachable by the autonomous locomotion craft, said destination point being situated in the area of coverage (Z2) of an access point (PA2) to a mobile communication network (NT); and
- a command module configured to provide the autonomous locomotion craft with a set of instructions (INS) specifying the destination point toward which the autonomous locomotion craft should move, and specifying at least one communication operation to be carried out in connection with the mobile communication network,
in which the selection module is configured to carry out an identification of a plurality of access points providing, in an associated area of coverage, access to the mobile communication network, the selected destination point being situated in the area of coverage of one among the plurality of access points.

14. Communication system comprising a communication device according to Claim 13 and an autonomous locomotion craft comprising:
- a module (MD20) for obtaining a set of instructions (INS);
- a control module (MD22) configured to control the movement of the autonomous locomotion craft toward a destination point (P2) specified in the set of instructions, said destination point being situated in the area of coverage (Z2) of an access point (PA2) to a mobile communication network (NT);
- an evaluation module (MD24) configured to evaluate a quality of connection between the autonomous locomotion craft and the mobile communication network during said movement;
- a communication module (MD26) configured to execute at least one communication operation, specified in the set of instructions, in connection with the mobile communication network, as soon as one of the following conditions is fulfilled:
• the autonomous locomotion craft reaches the destination point; and
• the connection quality reaches a predetermined threshold level.
